# DEMANDE DE BREVET EUROPEEN

(11) **EP 2 264 418 A1**
(43) Date de publication de la demande: **22.12.2010**
(21) Numéro de dépôt: 10165918.3
(22) Date de dépôt: 15.06.2010
(51) Int. Cl.: G01L 5/28, G01M 17/007

(54) **Rouleau pour freinomètre**

(30) Priorité: 16.06.2009 FR 0902919
(71) Demandeur: Createch Composites, 83870 Signes (FR)
(72) Inventeur: Maillard, Jean-Louis, 83870, SIGNES (FR)
(74) Mandataire: Debay, Yves

(57) **Abrégé**

L'invention consiste en un rouleau (0) pour freinomètre comprenant au moins un cylindre rigide recouvert au moins d'un revêtement antidérapant (2) qui est **caractérisé en ce que** le cylindre possède une structure alvéolaire formé de caissons (1) empilés enfilés autour d'un axe (4), de telle façon que l'ouverture de chaque caisson (1) est dans la même direction, le dernier caisson (1a) de l'empilement dont l'ouverture reste ouverte étant obturé par un autre caisson (1b) dont la direction de l'ouverture est opposée aux caissons (1) de l'empilement et maintenues solidaires entre elles par des couches (3) de fibres de verre imprégnées d'une résine polymère thermodurcissable, au moins un disque (9) métallique de diamètre égal au diamètre intérieur d'un caisson étant soudé à l'axe (4) et collé à au moins un caisson (1). L'invention décrit également un procédé de fabrication du rouleau (0).

## Description

La présente invention concerne le domaine des bancs de freinage pour véhicule et plus particulièrement les rouleaux de freinage. La présente invention propose un rouleau de freinage et son procédé de fabrication.

Les contrôles techniques des véhicules sont, pour la plupart des pays dans le monde, une étape obligatoire dans la vie d'un véhicule afin de vérifier si les véhicules répondent aux exigences de normes de fiabilité, de sécurité et de protection de l'environnement.

Une des vérifications effectuées lors d'un contrôle technique est le test de freinage permettant de contrôler la fiabilité de freinage d'un véhicule. La vérification de la fiabilité de freinage d'un véhicule est de façon habituelle réalisée à l'aide de bancs de freinage à rouleaux ou autrement appelés freinomètres.

Ces rouleaux sont montés sur des paliers et sont entraînés en rotation à l'aide d'un moteur. Au bout d'un certains nombres de tests de freinage, les rouleaux subissent une usure qui nécessite leur remplacement. Or, les rouleaux sont la plupart du temps en métal et sont donc lourds ce qui ne facilite pas leur remplacement.

Le brevet FR 2 891 907 décrit un rouleau de freinomètre en matériau composite pour mesurer la capacité de freinage de véhicules légers et poids lourds, facile à manipuler permettant d'éviter le démontage du rouleau après une usure trop importante. Pour cela, l'invention donne la possibilité d'enlever le revêtement du rouleau grâce à un tissu d'arrachage pour le remplacer sans avoir à démonter et à changer entièrement le rouleau. Or, le remplacement du revêtement demande des moyens importants pour ajuster et fixer un nouveau revêtement.

Le brevet DE 25 40 416 décrit un banc à rouleaux pour tester le rendement et/ou les freins d'un véhicule plus particulièrement de véhicules automobiles. Chaque rouleau est composé d'un axe de section carrée ou hexagonale et de demi-coques composées d'un mélange de roche granulaire et de résine durcie et dont la forme interne correspond exactement à la forme extérieure de l'axe. Les demi-coques sont alors disposées côte à côte le long de l'axe de telle façon que chaque demi-coque est liée à une autre demi-coque lui faisant face. La fabrication de ces rouleaux demande plusieurs étapes et un temps assez long et fastidieux. La liaison entre chaque paire demi-coque peut prendre beaucoup de temps selon le nombre de demi-coques à installer. En outre, ce type de rouleaux demandent la mise en place de renfort pour chaque paire de demi-coque.

La présente invention a pour but de proposer une solution technique aux rouleaux de freinage en fournissant un rouleau pour freinomètre bon marché, résistant et facile à monter et démonter.

Un autre but de l'invention est de proposer un procédé de fabrication du rouleau de freinage.

Pour atteindre ce but, le rouleau pour freinomètre comprenant au moins un cylindre rigide recouvert au moins d'un revêtement antidérapant
est **caractérisé en ce que** le cylindre possède une structure alvéolaire formé de caissons en forme de cylindre dont une extrémité est ouverte pour former l'ouverture du caisson et dont l'autre extrémité est partiellement fermée avec un orifice central, les caissons étant empilés enfilés autour d'un axe par l'orifice central, de telle façon que l'ouverture de chaque caisson est dans la même direction, le dernier caisson de l'empilement dont l'ouverture reste ouverte étant obturé par un autre caisson dont la direction de l'ouverture est opposée aux caissons de l'empilement et maintenues solidaires entre eux par des couches de fibres de verre imprégnées d'une résine polymère thermodurcissable, au moins un disque métallique de diamètre égal au diamètre intérieur d'un caisson étant soudé à l'axe et collé à au moins un caisson.

Selon une autre particularité, les couches de fibres de verre sont composées de fibres de verre possédant au moins une direction à 0° et une direction à 45° par rapport à l'axe du cylindre.

Selon une autre particularité, les caissons sont constitués de fibres de verre quadri-directionnelles imprégnées d'une résine polymère thermodurcissable.

Selon une autre particularité, le revêtement antidérapant est constitué d'une résine polymère thermodurcissable et de grains de matière abrasive de granulométrie variable.

Un autre but de l'invention est de proposer un procédé de fabrication du rouleau de freinage **caractérisé en ce qu**'il comporte au moins les étapes suivantes :
- une étape de découpage d'une pluralité de disques dans un tissu de fibres de verre quadri-directionnelles ;
- une étape de formage en caissons des disques de tissu de fibres de verre quadri-directionnelles à l'aide de moules ;
- une étape d'imprégnation puis de polymérisation d'une résine entre les fibres de verre quadri-directionnelles du tissu formé en caisson dans le moule ;
- une étape d'empilement des caissons sur un axe ;
- une étape de couverture de couches de fibres de verre autour du cylindre formé par l'empilement des caissons ;
- une étape d'imprégnation puis de polymérisation d'une résine entre les fibres de verre des couches ;
- une étape de couverture d'un antidérapant.

Selon une autre particularité, l'étape d'imprégnation et de polymérisation d'une résine entre les fibres de verre quadri-directionnelles du tissu est suivie d'une étape d'ouverture du moule et d'éjection.

Selon une autre particularité, l'étape de couverture d'un antidérapant est suivie d'une étape d'étuvage.

Selon une autre particularité, le moule est formé de deux pièces complémentaires.

Selon une autre particularité, l'étape d'empilement des caissons sur un axe est au moins précédée des étapes suivantes :
- une étape d'usinage d'un axe ;
- une étape de découpe des extrémités.

Selon une autre particularité, l'étape d'empilement des caissons est précédée des étapes suivantes :
- une étape de soudure sur l'axe d'au moins un disque métallique de diamètre égal au diamètre intérieur d'un caisson, le ou les disques étant perpendiculaires à l'axe de l'axe du rouleau et l'axe du rouleau passant à travers le centre du ou des disques ;
- une étape de fixage du ou des disques métalliques individuellement dans le ou les caissons.

Un autre but de l'invention est de proposer un système de fabrication du rouleau de freinage **caractérisé en ce qu**'il comporte au moins
un moule composé de deux pièces complémentaires cylindriques dont une pièce femelle venant envelopper une pièce mâle en s'emboîtant, un espace restant entre les pièces de la forme du caisson, la pièce femelle du moule possédant en son centre un axe cylindrique saillant de forme complémentaire à un orifice cylindrique situé au centre de la pièce mâle du moule
et un outil composé d'au moins un support supportant en rotation l'axe du rouleau de freinage à ses extrémités et d'une lame à étaler parallèle à l'axe du rouleau de freinage faisant au moins la longueur du rouleau de freinage et dont la distance entre sa partie la plus basse et le rouleau détermine l'épaisseur finale du revêtement à étaler.

D'autres particularités et avantages de la présente invention apparaîtront plus clairement à la lecture de la description ci-après, faite en référence au dessin annexé :
- la figure 1 représente le rouleau de freinage selon une configuration ;
- la figure 2 représente le rouleau de freinage selon une autre configuration ;

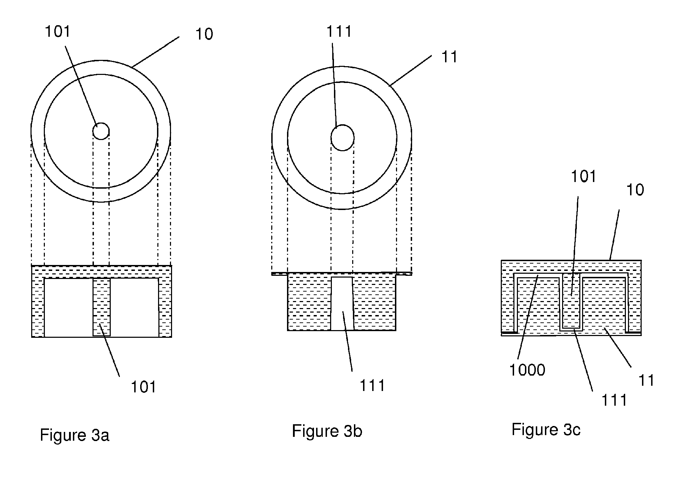

- la figure 3a représente la pièce femelle du moule, la figure 3b représente la pièce mâle du moule, le figure 3c représente le moule au moment de la fabrication d'un caisson ;

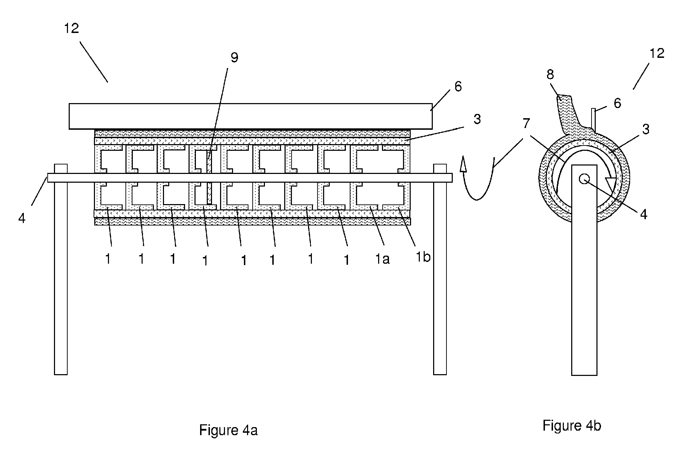

- la figure 4a représente l'outil d'étalement de la résine vue de face, la figure 4b représente l'outil d'étalement de la résine vue du côté droit ;
- la figure 5 illustre le procédé de fabrication du rouleau.

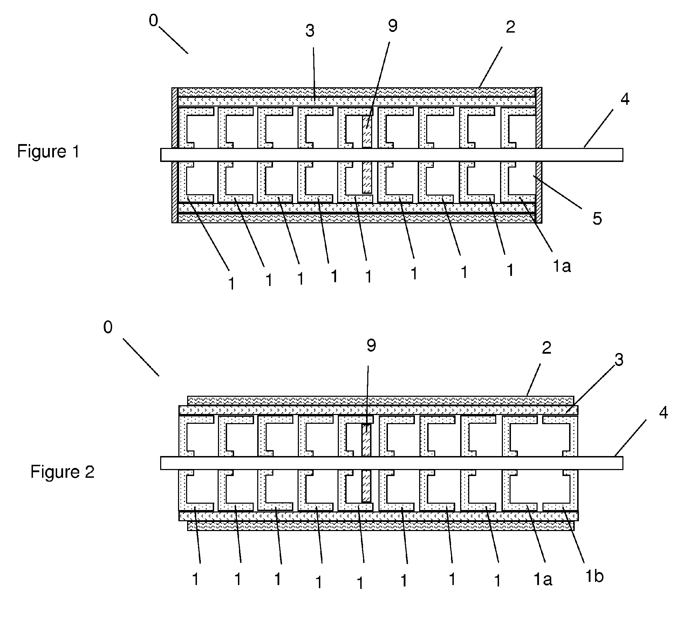

En référence aux figures 1 et 2, l'invention concerne un rouleau (0) de freinage en matériau composite.

Le rouleau (0) de freinage comporte un cylindre rigide recouvert d'un revêtement (2) antidérapant.

Le cylindre est un empilement de caissons (1) formant ainsi une structure alvéolaire. Chaque caisson (1, 1a) a, par exemple, une forme cylindrique dont une extrémité est ouverte pour former l'ouverture du caisson (1, 1a) et dont l'autre extrémité est partiellement fermée avec un orifice central. L'empilement de caissons (1) est recouvert de couches (3) de fibres de verre dont on a choisit la direction pour donner la forme du cylindre, pour maintenir solidaires les caissons entre eux et/ou pour assurer la rigidité et la résistance mécanique du rouleau (0) de freinage. Les directions des fibres de verre peuvent être par exemple de 0° par rapport à l'axe du cylindre et/ou de 45° pour assurer l'entraînement en rotation dû au freinage. Les couches de fibres de verre sont imprégnées d'une résine polymère thermodurcissable. Cette résine possède un temps de polymérisation assez long, par exemple entre 6 h et 48 h, afin d'avoir la possibilité de travailler les couches (3) de fibres de verre et d'obtenir un rouleau (0) avec les propriétés physiques exigées. Ce temps de polymérisation long permet en outre de réduire les pertes lors de la production du rouleau (0).

Selon une configuration représentée sur la figure 1, les caissons (1) sont empilés de telle façon que l'ouverture de chaque caisson (1) soit dans la même direction. Le dernier caisson (1a) de l'empilement dont l'ouverture n'est pas recouverte par un autre caisson est fermé ou obturé par une première flasque (5) du même diamètre que le rouleau (0). Une deuxième flasque (5) du même diamètre que le rouleau (0) est disposée à l'opposé de la première flasque pour finir l'autre extrémité du rouleau (0).

Selon une autre configuration représentée sur la figure 2, les caissons (1) sont empilés de telle façon que l'ouverture de chaque caisson (1) est dans la même direction. Le dernier caisson (1 b) de l'empilement possède une ouverture dont la direction est opposée aux autres caissons (1) de l'empilement fermant ainsi le caisson (1a) sur laquelle il est empilé.

De manière non-limitative, les caissons (1) sont constitués de fibres de verre, de façon avantageuse mais non-limitative, quadri-directionnelles imprégnées d'une résine polymère thermodurcissable. Cette résine polymérise sur une période assez courte, par exemple, environs de 8 min à une température de 110°C.

Le revêtement antidérapant est constitué de manière non-limitative d'une résine polymère thermodurcissable et de grains de matière abrasive de granulométrie variable. Les grains de matière abrasive peuvent être du carbure de silicium. Ces grains sont mélangés à de la résine afin de constituer le revêtement antidérapant.

Chaque caisson est percé d'un trou en son centre afin de laisser passer un axe.

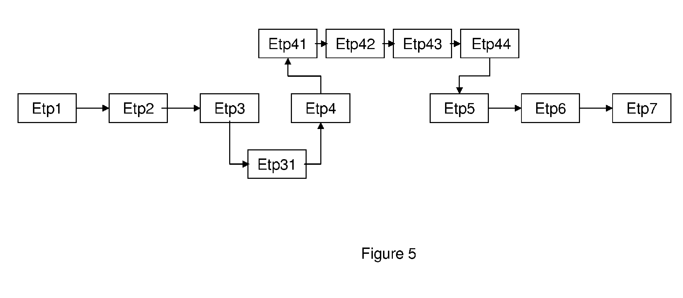

En référence à la figure 5, le procédé de fabrication du rouleau de freinage comporte plusieurs étapes.

Les premières étapes permettent la fabrication des caissons (1) formant le cylindre du rouleau (0) de freinage.

Un caisson (1) est fabriqué (Etp1) à partir d'un tissu de fibre de verre dans lequel est découpé un disque. De façon avantageuse mais non-limitative, le tissu est composé de fibres de verre quadri-directionnelles.

Une étape (Etp2) de formage permet le formage des caissons à l'aide d'un moule composé de deux pièces complémentaires cylindriques dont une pièce femelle (10) venant envelopper une pièce mâle (11) en s'emboîtant.

Lorsqu'elles sont emboîtées, les deux pièces complémentaires du moule créent un espace (1000) entre elles de la forme du caisson (1) à former. De plus, la pièce femelle (10) du moule possède en son centre un axe (101) cylindrique saillant de forme complémentaire à un orifice (111) cylindrique situé au centre de la pièce mâle (11) du moule. Cet axe (101) cylindrique saillant permet de créer un trou au centre des caissons (1) pour pouvoir enfiler les caissons (1) le long de l'axe (4). Le diamètre de l'axe (101) cylindrique saillant est sensiblement égal au diamètre de l'axe (4) du rouleau (0) de freinage.

Dans l'étape (Etp3), de la résine polymère thermodurcissable est alors introduite dans le moule par une ouverture dans le moule pour imprégner le tissu de fibres de verre. Le moule est alors fermé pour laisser la résine se polymériser. De façon avantageuse mais non-limitative, la résine utilisée polymérise en 8 min environs à une température de 110°C.

Au bout du temps de polymérisation, le moule est ouvert et le caisson (1) est éjecté (Etp31).

Les caissons (1) ainsi fabriqués sont alors empilés (Etp4) selon la configuration représentée sur la figure 1 ou selon la configuration représentée sur la figure 2 en étant enfilés sur un axe (4) à travers un orifice situé au centre de chaque caisson.

Dans la configuration de la figure 1, une première flasque (5) est placée sur le dernier caisson (1a) de l'empilement qui n'est pas fermée par un autre caisson (1) en étant enfilé sur l'axe (4). Une deuxième flasque (5) est enfilée sur l'axe (4) de l'autre côté du rouleau pour finir l'extrémité du rouleau (0) non-recouverte de la première flasque (5).

Dans la configuration de la figure 2, un caisson (1 b) est placé sur le dernier caisson (1a) de l'empilement qui n'est pas fermé par un autre caisson (1) en étant enfilé sur l'axe (4). Ce caisson (1 b) possède une ouverture dont la direction est opposée aux autres caissons (1) de l'empilement fermant ainsi le caisson (1a) sur laquelle il est empilé.

De manière non-limitative, un cylindre peut être composé d'un empilement d'une douzaine de caissons environ.

Une étape (Etp5) suivante consiste en la couverture de couches (3) de fibres de verre autour du cylindre formé par l'empilement des caissons (1). Cette couverture permet de maintenir et de joindre les caissons (1) entre eux, de donner la forme au rouleau (0) de freinage et d'assurer la rigidité et la résistance mécanique au rouleau (0) de freinage.

Les couches (3) de fibres de verre sont choisies pour la direction de ses fibres de verres. De façon avantageuse mais non-limitative, une direction à 0° par rapport à l'axe du cylindre et une direction à 45° par rapport à l'axe du cylindre sont choisies pour assurer l'entraînement en rotation lors d'un freinage.

Les couches (3) de fibres de verre sont alors imprégnées (Etp6) d'une résine polymère thermodurcissable. De façon avantageuse mais non-limitative, la résine utilisée polymérise au bout de 6 h à 48 h. La résine, en plus de maintenir les fibres de verre entre elles, permet le collage des couches (3) de fibres de verre sur l'empilement des caissons (1).

L'outil (12) permettant l'étalement et le nivelage de la résine constituant le revêtement antidérapant est composé d'au moins un support supportant l'axe (4) du rouleau (0) de freinage à ses extrémités et d'une lame (6). Le support autorise la rotation (7) du cylindre composé de l'empilement des caissons (1) autour de son axe (4). La rotation (7) peut être réalisée manuellement ou à l'aide d'un moteur. La lame (6) parallèle au rouleau (0) de freinage et au moins égale à la longueur du rouleau (0) de freinage, permet l'étalement et le nivelage de la résine (8) versée sur le cylindre. La distance entre la partie la plus basse de la lame (6) et le cylindre détermine l'épaisseur de résine désirée être déposée.

Cet outil (12) permet l'étalement du revêtement (2) antidérapant.

Une étape (Etp7) suivante consiste au dépôt du revêtement (2) antidérapant pouvant être constitué de grains de matière abrasive, par exemple du carbure de silicium, de granulométrie variable. Ces grains sont mélangés à de la résine, par exemple l'époxyde.

Dans une étape (Etp71) suivante, le rouleau (0) subit ensuite une étape d'étuvage dans un conteneur pour donner toutes les caractéristiques mécaniques à la résine et à l'antidérapant. Le temps d'étuvage peut être, de façon non-limitative, de 24 h à une température de 40°C.

Le rouleau (0) de freinage peut alors être installé sur le banc de freinage.

Les étapes de la procédure peuvent être précédées par les étapes de fabrication de l'axe (4) du rouleau (0). Ces étapes consistent en au moins une étape (Etp41) d'usinage de l'axe (4), une étape (Etp42) de découpage des extrémités de l'axe (4) et, éventuellement, une étape de soudure d'un pignon d'entraînement du rouleau (0).

Les étapes de la procédure sont également précédées par l'ajout par soudure (Etp43) sur l'axe (4) d'un disque (9) métallique de diamètre égal au diamètre intérieur d'un caisson afin de pouvoir fixer le caisson (1) au disque (9). Le disque (9) est soudé de façon qu'il soit perpendiculaire à l'axe de l'axe (4) du rouleau (0) et que l'axe (4) du rouleau (0) passe à travers le centre du disque (9). Le caisson (1) est fixé (Etp44) au disque (9), par exemple, par collage, par encliquetage ou par emboîtement de rainurages complémentaires situés les bords extérieurs du disque (9) et sur la paroi intérieure du caisson (1).

Dans une autre configuration non-représentée, plusieurs disques peuvent être fixés à chacun un caisson.

Après plusieurs utilisations, le rouleau (0) de freinage subit une usure. L'usure peut être facilement supprimée par un ragréage.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Rouleau (0) pour freinomètre comprenant au moins un cylindre rigide recouvert au moins d'un revêtement antidérapant (2)
est **caractérisé en ce que** le cylindre possède une structure alvéolaire formé de caissons (1) en forme de cylindre dont une extrémité est ouverte pour former l'ouverture du caisson (1) et dont l'autre extrémité est partiellement fermée avec un orifice central, les caisson (1) étant empilés enfilés autour d'un axe (4) par l'orifice central, de telle façon que l'ouverture de chaque caisson (1) est dans la même direction, le dernier caisson (1a) de l'empilement dont l'ouverture reste ouverte étant obturé par un autre caisson (1b) dont la direction de l'ouverture est opposée aux caissons (1) de l'empilement et maintenues solidaires entre elles par des couches (3) de fibres de verre imprégnées d'une résine polymère thermodurcissable, au moins un disque (9) métallique de diamètre égal au diamètre intérieur d'un caisson étant soudé à l'axe (4) et collé à au moins un caisson (1).

2. Rouleau (0) pour freinomètre selon la revendication 1, **caractérisé en ce que** les couches (3) de fibres de verre sont composées de fibres de verre possédant au moins une direction à 0° et une direction à 45° par rapport à l'axe (4) du cylindre.

3. Rouleau (0) pour freinomètre selon la revendication 1, **caractérisé en ce que** les caissons (1) sont constituées de fibres de verre quadri-directionnelles imprégnées d'une résine polymère thermodurcissable.

4. Rouleau (0) pour freinomètre selon la revendication 1, **caractérisé en ce que** le revêtement antidérapant (2) est constitué d'une résine polymère thermodurcissable et de grains de matière abrasive de granulométrie variable.

5. Procédé de fabrication du rouleau (0) de freinage **caractérisé en ce qu'**il comporte au moins les étapes suivantes :
- une étape (Etp1) de découpage d'une pluralité de disques dans un tissu de fibres de verre quadri-directionnelles ;
- une étape (Etp2) de formage en caissons (1) des disques de tissu de fibres de verre quadri-directionnelles à l'aide de moules ;
- une étape (Etp3) d'imprégnation puis de polymérisation d'une résine entre les fibres de verre quadri-directionnelles du tissu formé en caisson dans les moules ;
- une étape (Etp4) d'empilement des caissons (1) sur un axe (4) ;
- une étape (Etp5) de couverture de couches (3) de fibres de verre autour du cylindre formé par l'empilement des caissons (1) ;
- une étape (Etp6) d'imprégnation puis de polymérisation d'une résine entre les fibres de verre des couches (3) ;
- une étape (Etp7) de couverture d'un antidérapant (2).

6. Procédé de fabrication du rouleau (0) selon la revendication 5, **caractérisé en ce que** l'étape (Etp3) d'imprégnation et de polymérisation d'une résine entre les fibres de verre quadri-directionnelles du tissu est suivie d'une étape (Etp31) d'ouverture du moule et d'éjection.

7. Procédé de fabrication du rouleau (0) selon la revendication 5, **caractérisé en ce que** l'étape (Etp7) de couverture d'un antidérapant est suivie d'une étape d'étuvage (Etp71).

8. Procédé de fabrication du rouleau (0) selon la revendication 5, **caractérisé en ce que** l'étape (Etp4) d'empilement des caissons sur un axe est au moins précédée des étapes suivantes :
- une étape (Etp41) d'usinage d'un axe ;
- une étape (Etp42) de découpe des extrémités.

9. Procédé de fabrication du rouleau (0) selon la revendication 5, **caractérisé en ce que** l'étape (Etp4) d'empilement des caissons (1) est précédé des étapes suivantes :
- une étape (Etp43) de soudure sur l'axe d'au moins un disque (9) métallique de diamètre égal au diamètre intérieur d'un caisson (1), le ou les disques (9) étant perpendiculaires à l'axe de l'axe (4) du rouleau (0) et l'axe (4) du rouleau (0) passant à travers le centre du ou des disques (9) ;
- une étape (Etp44) de fixage du ou des disques (9) métalliques individuellement dans le ou les caissons.

10. Système de fabrication du rouleau (0) de freinage **caractérisé en ce qu'**il comporte au moins
un moule composé de deux pièces complémentaires cylindriques dont une pièce femelle (10) venant envelopper une pièce mâle (11) en s'emboîtant, un espace (1000) restant entre les pièces de la forme du caisson (1), la pièce femelle (10) du moule possédant en son centre un axe (101) cylindrique saillant de forme complémentaire à un orifice (111) cylindrique situé au centre de la pièce mâle (11) du moule
et un outil (12) composé d'au moins un support supportant en rotation (7) l'axe (4) du rouleau (0) de freinage à ses extrémités et d'une lame (6) à étaler parallèle à l'axe (4) du rouleau (0) de freinage faisant au moins la longueur du rouleau (0) de freinage et dont la distance entre sa partie la plus basse et le rouleau (0) détermine l'épaisseur finale du revêtement à étaler.
